# EUROPÄISCHE PATENTSCHRIFT

(11) **EP 0 577 046 B1**
(45) Veröffentlichungstag und Bekanntmachung des Hinweises auf die Patenterteilung: **25.09.1996**
(21) Anmeldenummer: 93110286.7
(22) Anmeldetag: 28.06.1993
(51) Int. Cl.: F42B 33/06

(54) **Verfahren und Vorrichtung zur Aufarbeitung von pyrotechnischem Material**
Process and device for treatment of pyrotechnic material
Procédé et dispositif de traitement de matière pyrotechnique

(30) Priorität: 29.06.1992 DE 4221343; 29.06.1992 DE 4221344
(43) Veröffentlichungstag der Anmeldung: 05.01.1994
(73) Patentinhaber: Buck Werke GmbH & Co, D-73337 Bad Überkingen (DE)
(72) Erfinder: Magenheimer, Hans E., Dr., D-79379 Müllheim (DE); Traute, Roland, D-79219 Staufen (DE); Simon, Wolfgang, D-79379 Mülheim (DE); Hebisch, Heinz, Dr., D-16278 Angermünde (DE); Brehmer, Hans-Heinrich, D-16278 Gellmersdorf (DE); Goltz, Norbert, D-16303 Schwedt (DE); Rothenstein, Uwe, D-16303 Schwedt (DE)
(74) Vertreter: Spott, Gottfried, Dr.

(56) Entgegenhaltungen:
- DE-A- 4 037 919
- DE-C- 4 106 615

## Beschreibung

Die Erfindung betrifft Verfahren zur Aufarbeitung von pyrotechnischem Material gemäß den Oberbegriffe der Ansprüche 1 and 5 und eine hierzu geeignete Vorrichtung gemäß dem Oberbegriff des Anspruchs 19.

Pyrotechnische Munition, wie Leuchtkörper, Leuchtsignalmunition, Treibladungen, z. B. für Raketen, die wegen Ablauf der Lagerfähigkeit nicht mehr einsatzfähig ist, muß entsorgt werden. Eine gefahrlose mechanische Abtrennung der Wirkmassen ist dabei aufgrund des pyrotechnischen Potentials und der hohen Festigkeit der Wirkmasse nicht oder nur mit unverhältnismäßig hohem Aufwand möglich.

Leuchtkörper bestehen in der Regel aus einem Behälter, der üblicherweise aus Metall, bevorzugt aus Aluminium, gefertigt ist, einem Anzündsatz und der Wirkmasse. Die Wirkmasse setzt sich aus einem Leichtmetallpulver als Energielieferant, einem Oxidationsmittel, das Sauerstoff abspalten kann, einem organischen Bindemittel zur mechanischen Verfestigung des Gemenges und gegebenenfalls Farbverstärkern zusammen. In der Regel wird als Leichtmetallpulver Magnesium verwendet, da andere in Betracht kommende Metalle entweder toxikologisch bedenklich oder zu teuer sind. Als Oxidationsmittel werden in der Regel Nitrate, insbesondere Natriumnitrat, verwendet, wobei in Ausnahmefällen auch Chlorate oder Perchlorate zum Einsatz kommen. Als organische Bindemittel werden Polymere verwendet. Als Farbverstärker sind halogenhaltige Verbindungen, insbesondere fluorhaltige oder chlorhaltige Metallsalze, enthalten. Beim Abbrennen der Leuchtkörper entstehen daher überwiegend Metalloxide, wie Magnesiumoxid, Natriumoxid und Aluminiumoxid, Stickstoff und Stickoxide sowie Kohlenoxide und gegebenenfalls Halogenwasserstoff. Treibladungen bestehen im wesentlichen aus Nitrocellulose.

Die Wirkmassen von Wurfkörpern, die Reizstoffe freisetzen sollen, enthalten einen hohen Anteil an chlorierten Kohlenwasserstoffen neben Aluminium oder Zink in Pulverform oder als Grieß sowie reizfördernde Zusätze. Treibladungspulver entwickeln bei Ihrer Verbrennung einen hohen Anteil an Stickoxiden.

Die Entsorgung dieses pyrotechnischen Materials bereitet daher Probleme wegen des hohen Anteils an umweltbelastenden Stoffen, wie Stickoxiden und Halogenkohlenwasserstoffen, die bei der Verbrennung entstehen und nicht in die Umgebung entweichen dürfen. Die Aufarbeitung solchen Materials und die Abscheidung der belastenden Stoffe ist in der Regel sehr aufwendig.

Aus DE-B 41 06 615 sind ein Verfahren zur Aufarbeitung von chlorierte Kohlenwasserstoffe enthaltenden Nebelkörpern oder Nebelwirkmassen gemäß den Oberbegriffe der Ansprüche 1 und 5, sowie eine Vorrichtung gemäß dem Oberbegriff des Anspruchs 19 bekannt. Diese Wirkmassen werden in solcher Weise verarbeitet, daß die darin enthaltenen Zink- und Aluminiumverbindungen gewonnen und wiederverwertet werden können. Dieses Verfahren betrifft spezielle Aufarbeitungsschritte für die in den Wirkmassen enthaltenen chlorierten Kohlenwasserstoffe. Weiterhin ist aus DE-A 40 37 919 ein Verfahren zur Entsorgung von Treibladungsmitteln aus Munition bekannt, bei dem die Treibladungsmittel unter Zugabe von Wasser zerkleinert und dann mit einer speziellen Wirbelschichtfeuerung verbrannt werden.

Es ist nun Aufgabe der Erfindung, ein Verfahren bereitzustellen, mit dem pyrotechnisches Material, insbesondere Leuchtkörper und Treibladungen, entsorgt werden können, das sicher durchgeführt werden kann und bei dem keine schädlichen Stoffe in die Umwelt abgeführt werden.

Zur Lösung dieser Aufgabe werden verschiedene Verfahrensvarianten und Vorrichtungen zu deren Durchführung zur Verfügung gestellt, die auf das jeweils zu entsorgende Material optimal abgestimmt werden können.

Gemäß einem Aspekt wird erfindungsgemäß ein Verfahren zur Aufarbeitung von pyrotechnischem Material zur Verfügung gestellt, bei dem man
I. das pyrotechnische Material kontrolliert abbrennt, die Schlacke gegebenenfalls nachreagieren läßt und das entstehende Rohgas durch einen Hochtemperaturbereich leitet, in dem das Gas über einen vorbestimmten Zeitraum einer Temperatur von mindestens 1200°C ausgesetzt wird, um noch vorhandene organische Stoffe zu zersetzen;
   und ggf. anschließend das Rohgas naß reinigt, **dadurch gekennzeichnet, daß** man
II. das bei der Verbrennung entstehende Rohgas auf eine Temperatur unter 400°C abkühlt;
III. das Rohgas trocken reinigt, indem man es zuerst in einen Vorabscheider führt, wobei Grobpartikel abgeschieden werden, und das Rohgas dann über Feinstaubfilter führt, um feinteilige Feststoffe abzuscheiden, und/oder
IV. das Rohgas naß reinigt, indem man es zuerst durch einen Rotationswäscher leitet und dann über eine oder mehrere Absorptionseinheiten leitet, und
V. das gereinigte Gas als Abluft entläßt.

Mit dem erfindungsgemäßen Verfahren gelingt es, die bei der Verbrennung des pyrotechnischen Materials entstehenden schädlichen Bestandteile wie Stickoxide und Halogenverbindungen auf ein sehr geringes Maß abzusenken und den Aufwand der Gasreinigung zu minimieren. Darüber hinaus werden wiederverwertbare Stoffe gewonnen und die bei der Verbrennung entstehende Wärme kann sinnvoll genutzt werden. Unter pyrotechnischem Material im Sinne der Erfindung werden pyrotechnische Gegenstände oder pyrotechnische Sätze verstanden.

In der ersten Stufe dieser ersten Ausführungsform des erfindungsgemäßen Verfahrens wird das pyrotechnische Material kontrolliert abgebrannt. Das Abbrennen kann kontinuierlich oder diskontinuierlich geschehen, wobei bevorzugt bei kontinuierlicher Arbeitsweise das nachgeführte Material jeweils vom bereits im Reaktor befindlichen Material gezündet wird, während beim diskontinuierlichen Verfahren immer eine Charge abbrennt und danach die nächste Charge zugeführt und gezündet wird. Durchsatzmenge und Verweilzeit sind abhängig von dem abzubrennenden Material, der Verfahrensart und dem verwendeten Reaktor. Im allgemeinen liegt die Verweilzeit im Bereich von 10 Sekunden bis 1 Minute.

Die Verbrennung erfolgt in einer oder mehreren Abbrandkammern. Als Abbrandkammer wird ein Reaktor verwendet, der die bei der Verbrennung entstehenden hohen Temperaturen aushalten kann und in geeigneter Weise zu beschicken ist. Bevorzugt wird entweder ein Rohrreaktor oder ein Reaktor mit Ausmauerung eingesetzt. Als Rohrreaktor kommt bevorzugt eine vertikal angeordnete Vorrichtung zum Einsatz, die aus hochtemperaturfestem Stahl besteht und innen mit Gas gekühlt wird. Dazu wird Luft über Tangentialdüsen eingeführt und über Tangentialbleche so geleitet, daß sie an der Wand des Rohrreaktors entlang streicht und damit den Stahlmantel kühlt. Auf diese Weise wird erreicht, daß der Reaktormantel maximal bis 400°C heiß wird, was er ohne Beschädigung aushält. Durch die Luftführung über Tangentialdüsen wird die Heißtemperaturzone auf einen bestimmten Bereich definiert eingegrenzt. Dadurch wird einerseits erreicht, daß organische Schadstoffe direkt bei der Entstehung durch den Abbrand der pyrotechnischen Körper praktisch vollständig abgebaut werden, und andererseits, daß ein Anbacken von Material oder eine Abrasion an der Innenwand verhindert wird.

In einer anderen Ausführungsform wird ein Reaktor mit Ausmauerung verwendet. Dieser Reaktor stellt einen geschlossenen druckfesten Raum dar, der innen mit feuerfestem Material ausgekleidet ist und ist vorzugsweise ein Muldenreaktor oder Drehrohrofen. Da das feuerfeste Material Temperaturen von über 1500 bis 2000°C aushält, muß er nicht gekühlt werden. Bei einer bevorzugten Ausführungsform des Reaktors mit Ausmauerung ist unterhalb der Abbrandkammer eine fahrbare Wanne vorgesehen, die abschmelzendes Material und absinkende Schlacken aufnimmt und chargenweise entleert werden kann.

Für das erfindungsgemäße Verfahren können ein oder mehrere gleiche oder verschiedene Reaktoren gleichzeitig angewendet werden. Bevorzugt wird bei Aufarbeitung von pyrotechnischem Material, bei dem überwiegend alkalische Verbindungen in das Rohgas entweichen, ein Rohrreaktor verwendet, während zur Aufarbeitung von pyrotechnischem Material, das überwiegend saure Dämpfe freisetzt, ein Muldenreaktor eingesetzt wird.

Nach dem kontrollierten Abbrennen des pyrotechnischen Materials wird das entstehende Rohgas durch einen Hochtemperaturbereich geleitet, in dem es über einen vorbestimmten Zeitraum auf einer Temperatur von mindestens 1200°C gehalten wird, um eventuell noch vorhandene organische Stoffe zu zersetzen. Wenn das Rohgas durch die Verbrennung eine Temperatur von über 1200°C erreicht hat, genügt es, das Rohgas ohne Stützfeuerung über den vorbestimmten Zeitraum im Reaktionsbereich zu halten. Dies geschieht in einer Ausführungsform beispielsweise, indem man für den Reaktor eine ausreichende Höhe vorsieht, sodaß die Verweilzeit des aufsteigenden Rohgases zur vollständigen Durchreaktion im Hochtemperaturbereich ausreicht. In einer anderen Ausführungsform, bei der die Luft tangential eingeblasen wird, wird das Rohgas (Reaktionsgas) spiralförmig nach oben geleitet und verbleibt auf diese Weise ausreichend lange im Hochtemperaturbereich. Ist das Rohgas nicht heiß genug, so wird eine externe Heizquelle vorgesehen, um das Rohgas auf die gewünschte Temperatur zu erhitzen. Der Zeitraum der Nacherhitzung bemißt sich nach dem Anteil an organischen Verbindungen und kann vom Fachmann leicht festgestellt werden. In der Regel genügt ein Zeitraum von 2 bis 10 Sekunden. Um die organischen Verbindungen zu zersetzen, ist eine Temperatur von mindestens 1200°C, bevorzugt mindestens 1500°C erforderlich.

Das Rohgas, das den Hochtemperaturbereich verläßt, weist praktisch nur noch anorganische Verbindungen auf, die teils gasförmig, teils in Form kleinster Partikel vorliegen. Je nach Zusammensetzung des Rohgases wird eine Trockenreinigung und/oder Naßreinigung durchgeführt. Die Naßreinigung kann vor oder nach der Trockenreinigung durchgeführt werden. Bevorzugt wird zuerst das Rohgas trocken gereinigt und anschließend gegebenenfalls, je nach Bedarf, einer Naßreinigung unterzogen. Da das Gas, das aus dem Hochtemperaturbereich austritt, eine sehr hohe Temperatur aufweist, wird es auf eine Temperatur von unter 400°C abgekühlt, wobei gleichzeitig die Wärme einer Nutzung zugeführt werden kann. In verschiedenen Anwendungsfällen kann prozeßtechnisch Kaltluft dem Heißgas zur Kühlung zugemischt werden. Außerdem kann eine Wärmenutzung durch Anwendung bekannter Wärmerückgewinnungstechniken stattfinden. Beispiel hierfür ist die Anbindung an den Wärmekreislauf eines Heizwerkes. Die Abkühlung des Rohgases erfolgt abhängig von der nachfolgenden Behandlung auf Temperaturen unterhalb von 400°C oder bevorzugt unterhalb 200°C.

Die Reinigung des Rohgases erfolgt trocken und/oder naß. Für die Trockenreinigung soll das Gas auf bevorzugt unter 200°C abgekühlt werden, um so wirkungsvoll "De-novo-Synthesen" organischer Schadstoffe zu verhindern. Außerdem können die üblicherweise für die Reinigung verwendeten Filter in der Regel keine höheren Temperaturen ohne Schädigung aushalten.

Für die Trockenabscheidung wird das Rohgas zuerst in einen Vorabscheider geführt, in dem Grobpartikel abgeschieden werden. Als Grobpartikel werden Teilchen bezeichnet, die eine Größe von mindestens 10 µm aufweisen. Die Abscheidung der Grobpartikel kann in an sich bekannter Weise erfolgen. Bevorzugt wird zur Abscheidung ein Multizyklon eingesetzt. Die Art der in dem Multizyklon abgeschiedenen Teilchen ist abhängig von dem aufgearbeiteten pyrotechnischen Material. Werden beispielsweise Signalwirkmassen oder Leuchtkörper verbrannt, so bestehen die Grobpartikel, die in dem Multizyklon abgeschieden werden, überwiegend aus Magnesiumoxid und/oder Aluminiumoxid. Die im Multizyklon abgeschiedenen Oxide können einer Weiterverwertung zugeführt werden.

Das von den Grobpartikeln befreite Rohgas, das durch die Vorbehandlung ausreichend abgekühlt ist, kann dann zur Abtrennung kleiner Feststoffteilchen, d.h. Teilchen mit einem Durchmesser von weniger als 10 µm, über einen Feinstaubfilter geführt werden. Als Feinstaubfilter werden bevorzugt Gewebefilter eingesetzt. In einer bevorzugten Ausführungsform wird ein System mit mehreren Filtern verwendet, wobei ein Teil der Filter gleichzeitig beschickt wird und der andere Teil der Filter von dem abgelagerten Feststoffgemisch gereinigt wird. Mit den Feinstaubfiltern kann das Rohgas bis auf einen Feststoffgehalt von ≤ 10 mg/m³ gereinigt werden. Das aus den Feinstaubfiltern austretende Gas hat nunmehr eine Temperatur von ca. 100°C und kann, wenn es keine gasförmigen Verunreinigungen mehr enthält, direkt als Abluft entlassen werden. Weist das Gas noch gasförmige Verunreinigungen auf, insbesondere halogenhaltige Verbindungen oder Stickoxide, so wird es nach der Trockenreinigung einer Naßreinigung unterzogen. Bei der Aufarbeitung von Signal- und Leuchtwirkkörpern ist das Gas in der Regel so rein, daß eine Naßreinigung nicht mehr erforderlich ist.

Statt der Trockenreinigung des Gases kann eine Naßreinigung durchgeführt werden. Dies ist sinnvoll, wenn das Gas überwiegend gasförmige Verunreinigungen wie Halogenverbindungen und Stickoxide enthält und weniger Alkali- und Erdalkalioxide. Die Naßreinigung kann auch vor der oder bevorzugt im Anschluß an die Trockenreinigung durchgeführt werden.

Erfolgt die Naßreinigung des Rohgases als erster Reinigungsschritt, so wir das Rohgas bevorzugt zuerst in einer Wärmeaustauschereinheit auf eine Temperatur von unter 140°C abgekühlt wird. Das im Wärmeaustauscher gekühlte Rohgas oder das trocken gereinigte Rohgas wird dann in eine Waschvorrichtung zur Naßwäsche des Rohgases geleitet. Vorrichtungen dieser Art sind dem Fachmann bekannt. Bevorzugt wird zur Naßwäsche das Rohgas zuerst durch eine Venturieinheit geführt, um das Gas so weit abzukühlen, daß seine Temperatur unterhalb des Siedepunktes von Wasser liegt. Anschließend wird es in einen Rotationswäscher geleitet. Nach der Rotationswascheinheit erfolgt die Gaswäsche in bekannter Weise mit einer oder mehreren Absorptionseinheiten. Bevorzugt werden dazu Füllkörper- oder Bodenkolonnen verwendet, die je nach Beladung des Gases mit geeigneten Waschflüssigkeiten beschickt werden. An diese Kolonnen können sich, bei Bedarf, noch weitere Filtereinheiten anschließen, die z. B. mit Katalysatoren oder Kohleabsorptionsfiltern ausgerüstet sind. Das aus der bzw. den Absorptionseinheit(en) austretende sehr reine Gas wird als Abluft abgeleitet.

Um sicherzustellen, daß während des gesamten Verfahrens kein Rohgas, das nicht vollständig gereinigt ist, in die Umgebung entweichen kann, wird die gesamte Anlage während des Betriebes im Unterdruck gefahren. Dies erfolgt in an sich bekannter Weise, beispielsweise durch Anwendung eines Saugventilators.

Das erfindungsgemäße Verfahren kann variabel auf die Bedingungen, die beim Abbrennen verschiedener pyrotechnischer Materialien sich ergeben, eingestellt werden. So können die einzelnen Stufen des Verfahrens je nach Bedarf hintereinandergeschaltet werden. Werden beispielsweise Signal- und Leuchtmassen abgebrannt, bei denen überwiegend teilchenförmige Oxide entstehen, so wird das Rohgas bevorzugt nach Abkühlen über Vorabscheider und Feinstaubfilter geleitet und ist dann ausreichend rein, um in die Umgebung abgelassen zu werden. Werden pyrotechnische Körper aufgearbeitet, bei denen ein hoher Anteil an gasförmigen Verunreinigungen entsteht, so wird das Rohgas bevorzugt durch Naßwäsche und Leiten durch Absorptionseinheiten gereinigt. Enthält das Gas darüber hinaus Feststoffanteile, so kann es vor der Naßwäsche noch durch Vorabscheider und Feinstaubfilter geführt werden. In jedem Fall wird das Verfahren so durchgeführt, daß das Gas nur noch so geringe Anteile an Feststoffen und gasförmigen Verbindungen aufweist, daß es bei der Abgabe an die Umwelt bestehende Emissionsgrenzwerte erfüllt.

Gemäß einem weiteren Aspekt der vorliegenden Erfindung wird ein Verfahren zur Aufarbeitung von pyrotechnischem Material zur Verfügung gestellt, bei dem man das pyrotechnische Material kontrolliert abbrennt und ggf. das entstehende Rohgas naß reinigt, das dadurch gekennzeichnet ist, daß man
I. pyrotechnisches Material A, bei dem überwiegend alkalische Reaktionsprodukte entstehen, und pyrotechnisches Material B, bei dem überwiegend saure Reaktionsprodukte entstehen, kontrolliert abbrennt,
II. die vereinigten Rohgase auf eine Temperatur unter 400°C abkühlt,
III. die vereinigten Rohgase trocken reinigt, indem man sie zuerst in einen Vorabscheider führt, wobei Grobpartikel abgeschieden werden, und das Rohgas dann über Feinstaubfilter führt, um feinteilige Feststoffe abzuscheiden, und/oder
IV. das Rohgas naß reinigt, indem man es zuerst durch einen Rotationswäscher leitet und dann über eine oder mehrere Absorptionseinheit(en) leitet, und
V. das gereinigte Gas als Abluft entläßt.

In der ersten Stufe des erfindungsgemäßen Verfahrens wird pyrotechnisches Material A, bei dem überwiegend alkalische Reaktionsprodukte entstehen und pyrotechnisches Material B, bei dem überwiegend saure Reaktionsprodukte entstehen, kontrolliert abgebrannt. Das Abbrennen kann kontinuierlich oder diskontinuierlich geschehen, wobei bevorzugt bei kontinuierlicher Arbeitsweise das nachgeführte Material jeweils vom bereits im Reaktor befindlichen Material gezündet wird, während beim diskontinuierlichen Verfahren immer eine Charge abbrennt und danach die nächste Charge zugeführt und gezündet wird. Durchsatzmenge und Verweilzeit des Materials sind abhängig von dem abzubrennenden Material, der Verfahrensart und dem verwendeten Reaktor. Im allgemeinen liegt die Verweilzeit im Bereich von 10 Sekunden bis 1 Minute.

Zur Verbrennung des pyrotechnischen Materials werden erfindungsgemäß zwei Varianten zur Verfügung gestellt. In einer ersten Variante werden pyrotechnisches Material A und pyrotechnisches Material B getrennt in zwei Reaktoren abgebrannt und anschließend die Rohgase vereinigt, indem z. B. das bei Verbrennung des pyrotechnischen Materials A entstehende Rohgas in den Reaktor, in dem das pyrotechnische Material B abgebrannt wird, geführt wird. In einer zweiten Variante werden pyrotechnisches Material A und pyrotechnisches Material B in geeignetem Mengenverhältnis gleichzeitig in einem Reaktor abgebrannt. Wesentlich für die Erfindung ist, daß beim Abbrennen des pyrotechnischen Materials A überwiegend alkalische Reaktionsprodukte entstehen, während beim Abbrennen des pyrotechnischen Materials B überwiegend saure Reaktionsprodukte entstehen. Als pyrotechnisches Material A werden beispielsweise Signalwirkmassen, Leuchtkörper, thermitartige Mischungen eingesetzt. Als pyrotechnisches Material B sind beispielsweise Treibladungspulver, Nebel- und Reizwirkmassen sowie Farbrauche zu nennen. Die bei der Verbrennung des pyrotechnischen Materials A entstehenden alkalischen Produkte sind überwiegend Alkali- und Erdalkalioxide, während die bei Verbrennung des pyrotechnischen Materials B gebildeten sauren Reaktionsprodukte in der Regel Halogenverbindungen und Stickoxide sind.

Auch bei dieser Ausführungsform kann die Verbrennung in einer oder mehreren der oben beschriebenen Abbrandkammern erfolgen.

Bevorzugt wird für die Aufarbeitung des pyrotechnischen Materials A ein Rohrreaktor verwendet, während zur Aufarbeitung des pyrotechnischen Materials B ein Reaktor mit Ausmauerung eingesetzt wird.

Nach dem kontrollierten Abbrennen des pyrotechnischen Materials A und B werden gegebenenfalls die entstehenden Rohgase vereinigt, falls die Verbrennung in getrennten Reaktoren erfolgte, indem das bei Verbrennung der einen Art pyrotechnischen Materials entstehende Rohgas in den anderen Reaktor geleitet wird. Das jeweils bei der Verbrennung entstehende Rohgas bzw. die vereinigten Rohgase werden durch einen Hochtemperaturbereich geleitet, in dem sie über einen vorbestimmten Zeitraum auf einer Temperatur von mindestens 1200°C, bevorzugt bis zu 1500°C, gehalten werden, um eventuell noch vorhandene organische Stoffe zu zersetzen. Wenn das Rohgas durch die Verbrennung eine Temperatur von über 1200°C hat, so genügt es, das Rohgas ohne Stützfeuerung über den vorbestimmten Zeitraum im Reaktionsbereich zu halten. Dies geschieht in einer Ausführungsform beispielsweise, indem man für den Reaktor eine ausreichende Höhe vorsieht, sodaß die Verweilzeit des aufsteigenden Rohgases zur vollständigen Durchreaktion im Hochtemperaturbereich ausreicht. In einer anderen Ausführungsform, bei der die Luft tangential eingeblasen wird, wird das Rohgas (Reaktionsgas) spiralförmig nach oben geleitet und verbleibt auf diese Weise ausreichend lange im Hochtemperaturbereich. Ist das Rohgas nicht heiß genug, so wird eine externe Heizquelle vorgesehen, um das Rohgas auf die gewünschte Temperatur zu erhitzen. Der Zeitraum der Nacherhitzung bemißt sich nach dem Anteil an organischen Verbindungen und kann vom Fachmann leicht festgestellt werden. In der Regel genügt ein Zeitraum von 2 bis 10 Sekunden. Um die organischen Verbindungen zu zersetzen, ist eine Temperatur von mindestens 1200°C, bevorzugt mindestens 1500°C erforderlich.

Die vereinigten Rohgase, die den Hochtemperaturbereich verlassen, weisen praktisch nur noch anorganische Verbindungen auf, die teils gasförmig, teils in Form kleinster Partikel vorliegen. Je nach Zusammensetzung des Rohgases wird eine Trockenreinigung und/oder Naßreinigung durchgeführt. Die Naßreinigung kann vor oder nach der Trockenreinigung durchgeführt werden. Bevorzugt wird zuerst das Rohgas trocken gereinigt und anschließend gegebenenfalls, je nach Bedarf, einer Naßreinigung unterzogen. Da das Gas, das aus dem Hochtemperaturbereich austritt, eine sehr hohe Temperatur aufweist, wird es auf eine Temperatur von unter 400°C abgekühlt, wobei gleichzeitig die Wärme einer Nutzung zugeführt werden kann. In verschiedenen Anwendungsfällen kann prozeßtechnisch Kaltluft dem Heißgas zur Kühlung zugemischt werden. Außerdem kann eine Wärmenutzung durch Anwendung bekannter Wärmerückgewinnungstechniken stattfinden. Beispiel hierfür ist die Anbindung an den Wärmekreislauf eines Heizwerkes. Die Abkühlung des Rohgases erfolgt abhängig von der nachfolgenden Behandlung auf Temperaturen unterhalb von 400°C oder bevorzugt unterhalb 200°C.

Im Anschluß an diese Abkühlungsstufe wird das Rohgas trocken und/oder naß gereinigt. In der Regel wird eine Trockenreinigung durchgeführt, da die durch Reaktion der Bestandteile der vereinigten Rohgase gebildeten Verbindungen feinteilig vorliegen. Für den Fall, daß das Gas einen hohen Anteil gasförmiger Verunreinigungen enthält, kann sich an die Abkühlung sofort die Naßreinigung anschließen. Diese Variante ist Jedoch weniger bevorzugt. In der bevorzugten Ausführungsform wird das Gas zu einer Trockenreinigungsstufe geleitet. Auf dieser Strecke, bei der das Gas sich weiter abkühlt, reagieren die im Rohgas vorliegenden Verbindungen miteinander. Die alkalischen Verbindungen, insbesondere Alkali- und Erdalkalioxide, und die sauren Verbindungen, insbesondere Stickoxide, Chloride, Fluoride und Schwefeloxide (SO₂, SO₃), können zu Salzen reagieren, die sich dann leicht trocken abscheiden lassen. So entstehen aus den gasförmigen Stickoxiden Nitrat- und vor allem Nitritsalze, während die gasförmigen Chloride und Fluoride in Chlorid- bzw. Fluoridsalze überführt werden. Es erfolgt daher bevorzugt zuerst eine Trockenreinigung des Rohgases, die den Vorteil hat, daß keine Waschwässer anfallen, die aufgearbeitet werden müssen und daß die anfallenden Feststoffe direkt einer Wiederverwertung zugeführt werden können.

Die Trockenabscheidung der Grobpartikel in einem Vorabscheider und der feineren Teilchen mit Feinstaubfilter kann auch bei dieser Verfahrensvariante, wie oben für die erste Ausführungsform beschrieben, erfolgen.

Je nach Zusammensetzung des pyrotechnischen Materials A und B kann nach der Feinabscheidung das Gas so weit gereinigt sein, daß die Anteile an teilchenförmigem Material und gasförmigen Verbindungen unterhalb der Emissionsgrenzwerte liegen. Es kann dann direkt als Abluft entlassen werden. Weist das Gas noch gasförmige Verunreinigungen auf, insbesondere halogenhaltige Verbindungen oder Stickoxide, so wird es nach der Trockenreinigung einer Naßreinigung unterzogen. In der Regel ist jedoch bei geeigneter Auswahl des zu verbrennenden Materials eine Naßreinigung nicht mehr erforderlich.

Falls noch eine Naßreinigung erforderlich ist, so kann diese wie oben für die erste Verfahrensvariante beschrieben erfolgen.

Das erfindungsgemäße Verfahren gemäß dieser zweiten Ausführungsform kann variabel auf die Bedingungen, die beim Abbrennen verschiedener pyrotechnischer Materialien sich ergeben, eingestellt werden. Um das Verfahren möglichst effektiv durchzuführen, wählt man die pyrotechnischen Materialien A und B nach Art und Menge so aus, daß ein möglichst hoher Anteil der in das Rohgas entweichenden Stoffe miteinander zu Salzen reagieren, die trocken abgeschieden werden. So ist es beispielsweise vorteilhaft, Treibladungspulver, die bei der Verbrennung 10 bis 50 % an Stickoxiden (bezogen auf vorhandene Nitrogruppen) liefern, mit Leuchtwirkmassen, die einen hohen Anteil an Magnesiumoxid bilden, zu verbrennen, wobei es gelingt, den Anteil an Stickoxiden im Rohgas nach der Trockenabscheidung in den Bereich von 10 bis 100 ppm abzusenken. Ebenso bevorzugt ist es, Nebel- oder Reizstoffe, die einen hohen Anteil an organischen Halogenverbindungen aufweisen, mit Leuchtwirkmassen oder thermitartigen Mischungen, die Magnesium aufweisen, zu verbrennen.

Die Massenverhältnisse werden dabei jeweils so gewählt, daß eine vollständige Bindung der Halogenwasserstoffe durch Alkali- und Erdalkalielemente erreicht wird.

Für den Fall, daß nur eine Art an pyrotechnischem Material zur Entsorgung vorliegt, kann eine zweite Zusatzkomponente, die die jeweils andere Materialgruppe ersetzt, mitverbrannt werden. Ist beispielsweise nur pyrotechnisches Material A vorhanden, so können diesem Material beim Abbrennen Ammoniak oder Amine zur Bildung von Nitrit- und Nitratsalzen als Ersatz für pyrotechnisches Material B zugesetzt werden. Muß andererseits nur pyrotechnisches Material B entsorgt werden, so kann bei der Verbrennung Magnesium-, Aluminium- oder Eisenpulver als pyrotechnisches Material A zugesetzt werden, um wiederum die Salzbildung zu fördern.

Ein weiterer Gegenstand der Erfindung ist eine Vorrichtung zur Aufarbeitung von pyrotechnischem Material, gekennzeichnet durch
A) einen oder mehrere Reaktoren zum kontrollierten Abbrennen von pyrotechnischem Material (1, 101);
B) eine Wärmeaustauschereinheit (9, 109) zum Kühlen des Rohgases auf eine Temperatur von unter 400°C;
C)
   i) einen Vorabscheider (13, 113) zur Abtrennung von Grobpartikeln und
   ii) einen oder mehrere Feinstaubfilter (15, 115) und/oder
   iii) eine Waschvorrichtung zur Naßwäsche des Rohgases umfassend einen Rotationswäscher (121) und
   iv) eine oder mehrere Absorptionseinheit(en) (123),
wobei die einzelnen Komponenten (A) bis (C) je nach Erfordernis in beliebiger Weise miteinander verbunden sind.

Die erfindungsgemäße Vorrichtung ist aufgrund des modularen Konzepts geeignet zum Aufarbeiten verschiedener Arten von pyrotechnischem Material, wie z. B. Signal- und Leuchtmunition, Treibladungen, Raketentreibsätze, Nebelwirkmassen, Farbrauch und Reizstoffen. Je nach Art und Aggregatszustand der bei dem kontrollierten Abbrennen entstehenden Verbindungen können einzelne Komponenten oder alle Komponenten der erfindungsgemäßen Vorrichtung aufeinanderfolgend miteinander verbunden werden. In einer bevorzugten Ausführungsform, wie sie insbesondere zur Aufarbeitung von Signal- und Leuchtmunition geeignet ist, werden die Komponenten (A), (B), (C) (i) und (C) (ii) hintereinandergeschaltet. In einer anderen bevorzugten Ausführungsform, wie sie insbesondere zur Aufarbeitung von Nebelwirkmassen, Treibladungen und Raketentreibsätzen geeignet ist, werden die Komponenten (A), (B), (C) (iii) und (C) (iv) hintereinandergeschaltet. Entsteht beim kontrollierten Abbrennen ein sehr heterogenes System, das sowohl gasförmige Verunreinigungen als auch Kleinstpartikel enthält, so werden bevorzugt die Komponenten (A) bis (C) (iv) hintereinandergeschaltet. Für eine möglichst ökonomische Aufarbeitung wird in allen Fällen die Komponente (B) verwendet, da auf diese Weise die bei der Verbrennung entstehende Energie gewonnen und einer sinnvollen Verwertung zugeführt werden kann.

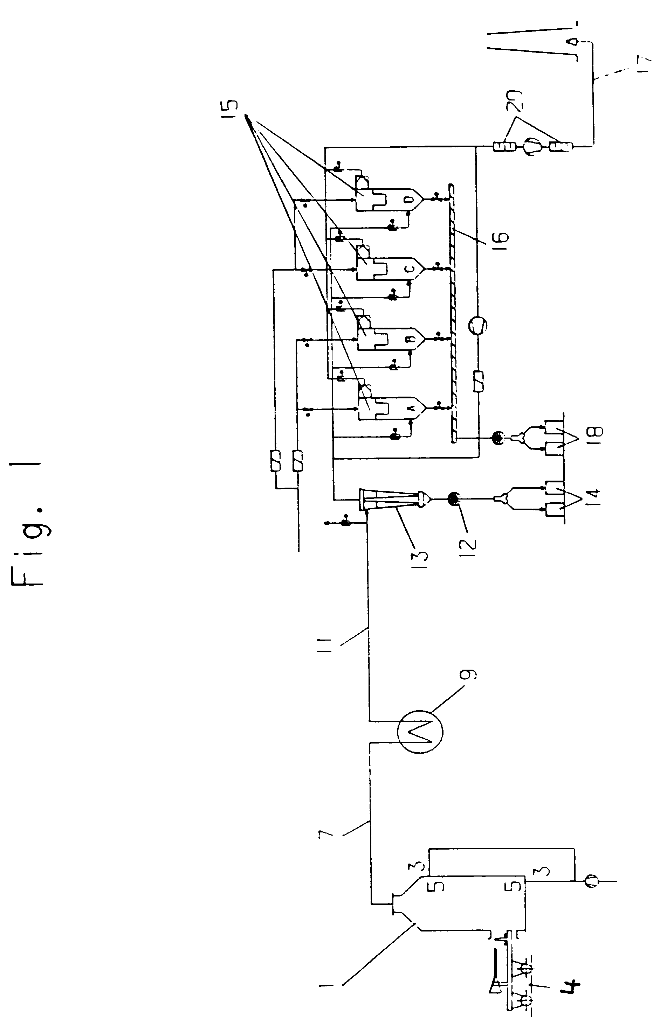

Die erfindungsgemäße Vorrichtung wird nun anhand der Figuren 1 bis 3 näher erläutert.

Figur 1 zeigt eine Vorrichtung, die besonders geeignet ist zur Aufarbeitung von Signal- und Leuchtmunition. Sie weist einen Rohrreaktor 1 auf, in dem die Signal- und Leuchtkörper kontrolliert abgebrannt werden. Der Rohrreaktor 1 ist ein Reaktor aus temperaturfestem Stahl ohne Innenauskleidung. Die Signal- und Leuchtkörper werden über eine diskontinuierliche Zuführvorrichtung 4 dem Rohrreaktor zugeführt. Weiterhin wird dem Rohrreaktor über eine Leitung 3 Frischluft über Tangentialdüsen 5 zugeführt. Das bei der Verbrennung entstehende Rohgas wird mindestens zwei Sekunden über 1200°C gehalten und danach über die Leitung 7 in die Wärmeaustauschereinheit 9 geführt. Das heiße Gas erhitzt dabei in den Wärmeaustauscher geführtes Wasser, das dann in den Heißwasser- oder Heizkreislauf eines Heizwerks geführt werden kann. Das Gas verläßt die Wärmeaustauschereinheit 9 über die Leitung 11 und wird in einen Multizyklon 13 geführt, wo Grobpartikel abgeschieden werden. Die Grobpartikel können chargenweise über eine Zellradschleuse 12 in Vorratsbehältern 14 gesammelt werden. Von dem Multizyklon wird das Gas in Feinstaubfilter 15 (A, B, C, D) geleitet, wo Feinstaubteilchen abgeschieden werden. Die Feinstaubfilter werden von Zeit zu Zeit gereinigt, wobei abgeschiedene Feststoffe über die Austragschnecke 16 abgeleitet und in Vorratsbehältern 18 gesammelt werden. Aus den Feinstaubfiltern 15 wird das Reingas dann über die Leitung 17 in die Umgebung abgelassen. An Leitung 17 ist ein Anschluß 20 vorgesehen, um bei Bedarf das Gas noch in eine Naßreinigungsstufe zu leiten.

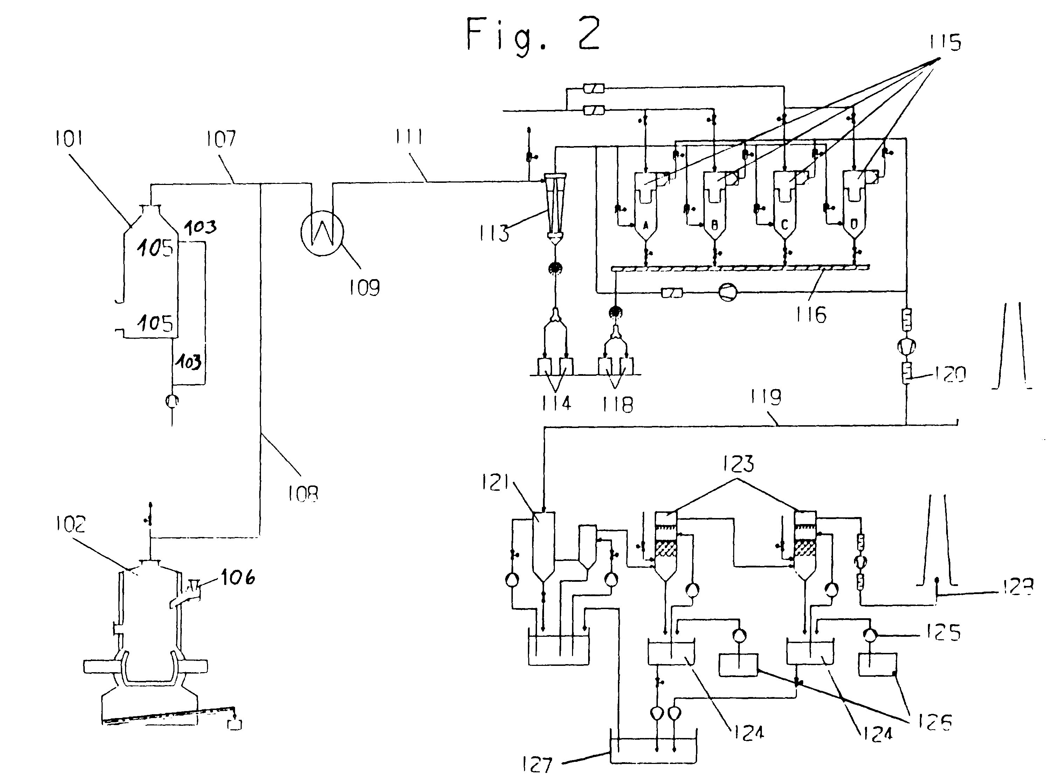

Figur 2 zeigt eine weitere bevorzugte Ausführungsform, bei der wahlweise ein Rohrreaktor 101 oder ein Muldenreaktor 102 zum kontrollierten Abbrennen des pyrotechnischen Materials eingesetzt werden kann. Das pyrotechnische Material, das verbrannt werden soll, kann dem Rohrreaktor 101 über eine diskontinuierliche Zuführvorrichtung zugeführt werden. Bei Verwendung des Muldenreaktors 102 wird das Material kontinuierlich über den Trichter 106 zugeführt. Beide Reaktoren 101, 102 sind über Leitungen 107 bzw. 108 mit dem Wärmeaustauschsystem 109 verbunden. Das Gas wird in das Wärmeaustauschsystem geleitet wie bei der Ausführungsform, die in Figur 1 beschrieben ist und dann über Leitung 111 in den Multizyklon 113 und von dort in die Feinstaubfilter 115 (A, B, C, D). Teile mit der gleichen Funktion wie in Figur 1 sind in Figur 2 mit derselben Bezugsziffer erhöht um die Zahl 100 bezeichnet. Das aus den Feinstaubfiltern 115 austretende Gas kann in dieser Ausführungsform noch naß gereinigt werden. Dazu wird es über Anschluß 120 und eine Leitung 119 in eine Rotationswascheinheit 121 geführt und von dort einer oder mehreren Absorptionseinheit(en) 123 zugeführt, die mit geeigneten Waschvorlagen 124 versehen sind. Die Waschvorlagen 124 können diskontinuierlich aufgearbeitet werden. Dazu wird in die in den Waschvorlagen 124 vorhandene Flüssigkeit über eine Pumpe 125 eine neutralisierende Lösung aus der Neutralisationsvorlage 126 gepumpt. Die neutralisierende Lösung wird dann in das Pufferbecken 127 abgelassen. Nach der Naßreinigung weist das Gas einen so geringen Anteil an Verunreinigungen auf, daß es in die Umgebung über Leitung 128 abgelassen werden kann.

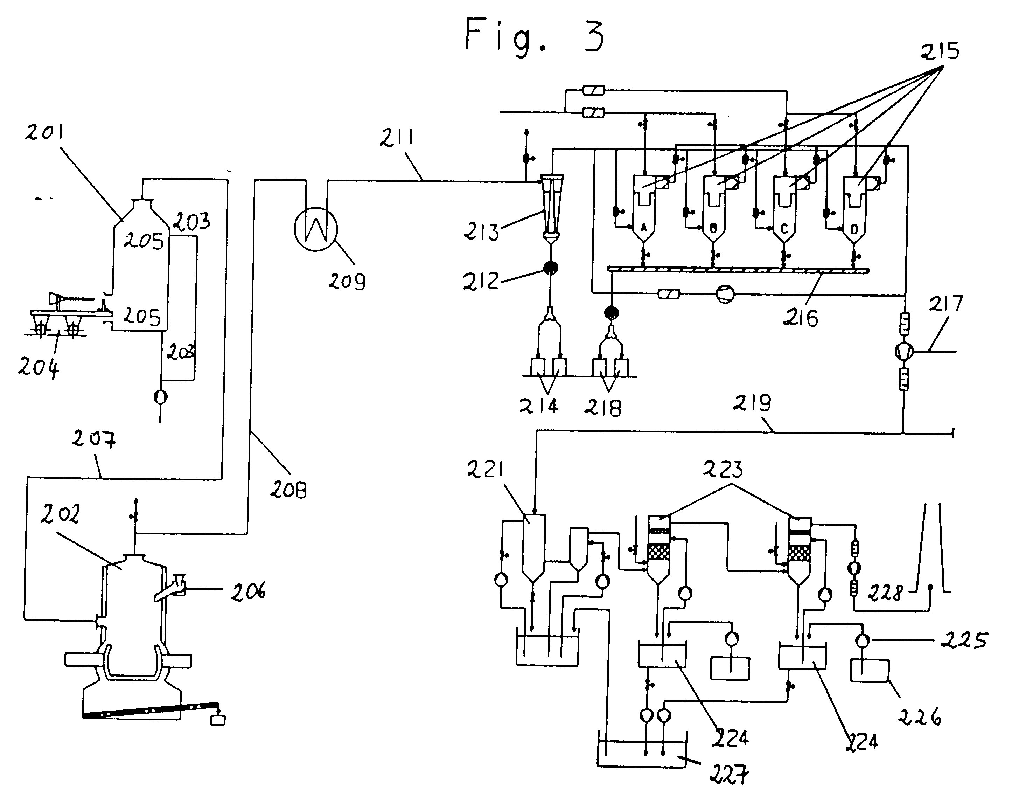

Figur 3 zeigte eine weitere Ausführungsform der erfindungsgemäßen Vorrichtung. Teile mit der gleichen Funktion wie in Figur 2 sind in Figur 3 mit derselben Bezugsziffer, erhöht um die Zahl 100 bezeichnet. In der erfindungsgemäßen Vorrichtung von Figur 3 erfolgt das kontrollierte Abbrennen von pyrotechnischem Material A und pyrotechnischem Material B in zwei getrennten Reaktoren. Pyrotechnisches Material, bei dem überwiegend alkalische Reaktionsprodukte entstehen, wird mit der Zuführungsvorrichtung 204 dem Rohrreaktor 201 zugeführt und kontrolliert abgebrannt. Der Rohrreaktor 201 ist ein Reaktor aus temperaturfestem Stahl ohne Innenauskleidung. Dem Rohrreaktor 201 wird über eine Leitung 203 Frischluft über Tangentialdüsen 205 zugeführt. Das pyrotechnische Material, bei dem überwiegend saure Reaktionsprodukte entstehen, wird dem Muldenreaktor 202 über den Beschickungstrichter 206 zugeführt und kontrolliert abgebrannt. Das bei der Verbrennung im Rohrreaktor 201 entstehende Rohgas wird über Leitung 207 dem Muldenreaktor 202 zugeleitet. Die Rohgase vermischen sich in einer im Muldenreaktor 202 gebildeten Hochtemperaturzone und werden mindestens zwei Sekunden über 1200°C gehalten und über Leitung 208 gemeinsam in die Wärmeaustauschereinheit 209 geführt. Das heiße Gas erhitzt dabei in den Wärmeaustauscher geführtes Wasser, das in den Heißwasser- oder Heizkreislauf eines Heizwerks oder in die interne Wärmeverwertung geführt werden kann. Das Gas verläßt die Wärmeaustauschereinheit 209 über die Leitung 211, wobei Leitung 211 so dimensioniert ist, daß das Gas eine ausreichende Wegstrecke hat, um eine Reaktion der alkalischen und sauren Verbindungen zuzulassen. Über Leitung 211 wird das Gas in einen Multizyklon 213 geführt, wo Grobpartikel abgeschieden werden. Die Grobpartikel werden chargenweise über die Zellradschleuse 212 abgezogen und in Vorratsbehältern 214 gesammelt. Von dem Multizyklon wird das Gas in Feinstaubfilter 215 (A, B, C, D) geleitet, wo Feinstaubteilchen abgeschieden werden. Die Feinstaubfilter werden von Zeit zu Zeit gereinigt, indem sie mit Druckluft beaufschlagt werden, wobei der Feinstaub über die Austragschnecke 216 in Vorratsbehälter 218 geführt und dort gesammelt wird. Nach Verlassen der Feinstaubfilter 215 kann das Gas entweder, wenn es ausreichend rein ist, in die Umgebung abgelassen werden über Leitung 217 oder einer Naßreinigung zugeführt werden, wobei es dann über Leitung 219 in eine Rotationswascheinheit 221 geführt wird. Nach der Rotationswäsche wird es durch eine oder mehrere Absorptionseinheit(en) 223 geleitet, die mit geeigneten Waschvorlagen 224 versehen sind und anschließend weist das Gas einen so geringen Anteil an Verunreinigungen auf, daß es in die Umgebung über Leitung 228 abgelassen werden kann. In die in den Waschvorlagen 224 vorhandene Flüssigkeit wird zur Entsorgung über die Pumpe 225 eine neutralisierende Lösung aus der Neutralisationsvorlage 226 gepumpt und die neutralisierte Lösung wird dann in das Pufferbecken 227 abgelassen.

Außer diesen drei beschriebenen Anlagen lassen sich die einzelnen Elemente der erfindungsgemäßen Vorrichtungen in beliebiger Weise hintereinanderschalten, abhängig von dem eingesetzten pyrotechnischen Material und der dadurch bedingten Zusammensetzung des Rauchgases.

Erfindungsgemäß werden Verfahren und eine Vorrichtung zur Verfügung gestellt, um verschiedene Arten von pyrotechnischem Material sicher und ohne Belastung der Umwelt aufzuarbeiten, wobei gleichzeitig wertvolles Material und Energie gewonnen werden.

Die Erfindung wird durch die folgenden Beispiele erläutert:

### Beispiel 1

In eine Reaktionskammer wurden zuerst Treibladungen in einem Mengenstrom von 100 kg/h zur Reaktion gebracht. Die Treibladungen verbrannt ohne zusätzliches Stützfeuer bei einer Temperatur von ca. 800°C mit Luftüberschuß. Dabei setzten sich bei einem Stickstoffeintrag von 13,7 kg/h durch die Treibladungen 5 % zu NO₂ um. Auf ein Abgas mit 11 % Sauerstoff bezogen enthielt das Abgas 6294 mg/Nm³ NO₂. In einer zweiten Reaktion wurden 50 kg/h Treibladung gemeinsam mit 100 kg Wirkmasse des Signalsalzes der Handleuchtsignalmunition-Grün entsorgt. Obwohl der Eintrag an stofflichem Stickstoff des Entsorgungsgemisches nur von 13,7 kg/h auf 11,16 kg/h verringert wurde, senkte sich dagegen der Ausstoß an Stickoxiden von 6294 mg/Nm³ auf 200 mg/Nm³ (98 Vol.ppm) ab.

Durch die reduzierende Wirkung der zur Reaktion gebrachten Wirkmassen verringerte sich zunächst durch die sich erhöhende Reaktionstemperatur der NO-Anteil im Abgas. Bei weiterem Abkühlen des Gases kam es auf der Strecke vom Wärmeaustauscher zum Grobfilter zur Bildung von Nitraten und vor allem zu Nitriten, die wiederum mit in dem Gas vorhandenen Erdalkaliverbindungen zu Erdalkalinitraten und -nitriten reagierten.

### Beispiel 2

Der in Beispiel 1 eingesetzte Treibladungsmengenstrom (ungefähr 50 kg/h) wurde in einer Reaktionskammer zusammen mit einem Brennsalz, das aus 52 % Magnesiumpulver und 48 % NaNO₃ bestand, gemeinsam zur Reaktion gebracht.

Das thermitartige Gemisch erreichte bei seiner Reaktion Temperaturen von mehr als 2000°C und führte dabei gleichzeitig zu einer erhöhten Reduktion der beim Abbrennen der Treibladungen gebildeten NOₓ-Gruppen. Durch die gegenüber Beispiel 1 höhere Reaktionstemperatur konnte der NOₓ-Gehalt im Gas noch weiter vermindert werden.

### Beispiel 3

Es wurden Reizstoffkörper, die 64 % Hexachlorcyclohexan, 34 % Aluminium, 1,25 % Paraffinöl und 0,75 % Chlorazetophenon enthielten, zusammen mit Brennsalz für Signalkörper, das 75 % KNO₃, 15 % Magnesium und 10 % Iditol enthielt, zur Reaktion gebracht. 50 kg der Reizstoffwirkmasse enthielten 23,5 kg Chlor. Das Chlor des Reizstoffes reagierte während des oxidativen Prozesses in primären und sekundären Reaktionsschritten unter Bildung von Kalium- und Magnesiumchlorid neben Aluminiumchlorid.

Ohne Zusatz weiterer chemischer Potentiale gelang es, durch die Paarung der beiden zu entsorgenden Stoffe, das Abgas auf einen HCl-Gehalt von ≤ 5 mg/Nm³ im Reingas zu senken.

### Beispiel 4

In einer gesonderten Reaktionskammer 1 wurden 75 kg/h Treibladung mit 50 kg Heizöl verbrannt. Die entstehenden Rohgase erreichten dabei eine Temperatur von mehr als 1200°C. 10 % des in der Treibladung enthaltenen Stickstoffs wurden zu NOₓ umgewandelt. Der entstehende Rohgasmengenstrom, der 2009 Nm³/h entsprechend 2050 mg/Nm³ NOₓ enthielt, wurde vollständig oder teilweise einer Reaktionskammer 2 zugeführt, in der Treibladungen gemäß Anspruch 1 zur Reaktion gebracht wurden. Das mit dem Rohgas zugeführte NOₓ wurde analog zum Reaktionsablauf von Beispiel 1 durch die reduzierende und katalytische Wirkung der pyrotechnischen Treibladungen weiter reduziert und verband sich im verbleibenden Anteil mit den oxidischen Stäuben zu einem für die Prozeßgasreinigung wirksamen Anteil an Nitriten. Durch die Aufsplittung des in die Reaktionskammer 2 geführten Prozeßgasstromes ließ sich der Prozeßgasstrom aus Reaktionskammer 2 so führen, daß die NOₓ-Werte des entstehenden Reingases den Normen < 200 mg/Nm³ bei 11 % O₂ im Abgas entsprachen.

### Beispiel 5

In einer Reaktionskammer wurden, gestützt durch einen Öl- oder Gasbrenner, Treibladungen kontinuierlich unter Zugabe von Verbrennungsluft zum Abbrand gebracht. Gleichzeitig wurden in die Reaktionszone pulverisierte Reaktionsprodukte der entsorgten pyrotechnischen Wirkmassen eingeführt, die Kaliumoxid, Magnesiumoxid, Bariumoxid etc. enthielten. Diese reaktiven Stäube wurden in enger Durchmischung mit dem Rohgas über eine Nachbrennkammer ausgeschieden. Die Stäube erhöhten zusätzlich die Bildung von N₂ aus den Nitrogruppen der Treibladungen und führten bei der sich anschließenden Entstaubung des Gases bei Temperaturen unter 200°C erneut zur Bildung von Nitriten/Nitraten und so zur Reduzierung des NOₓ-Gehaltes des Prozeßgases.

## Patentansprüche

1. Verfahren zur Aufarbeitung von pyrotechnischem Material, bei dem man
I. das pyrotechnische Material kontrolliert abbrennt, die Schlacke gegebenenfalls nachreagieren läßt und das entstehende Rohgas durch einen Hochtemperaturbereich leitet, in dem das Gas über einen vorbestimmten Zeitraum einer Temperatur von mindestens 1200°C ausgesetzt wird, um noch vorhandene organische Stoffe zu zersetzen;
und ggf. anschließend das Rohgas naß reinigt, **dadurch gekennzeichnet, daß man**
II. das bei der Verbrennung entstehende Rohgas auf eine Temperatur unter 400°C abkühlt;
III. das Rohgas trocken reinigt, indem man es zuerst in einen Vorabscheider (13, 113, 213) führt, wobei Grobpartikel abgeschieden werden, und das Rohgas dann über Feinstaubfilter (15, 115, 215) führt, um feinteilige Feststoffe abzuscheiden, und/oder
IV. das Rohgas naß reinigt, indem man es zuerst durch einen Rotationswäscher (121, 221) leitet und dann über eine oder mehrere Absorptionseinheiten (123, 223) leitet, und
V. das gereinigte Gas als Abluft entläßt.

2. Verfahren nach Anspruch 1, **dadurch gekennzeichnet, daß** als pyrotechnisches Material Signalkörper, Leuchtmunition, Treibladungen, Raketentreibsätze und/oder Nebelkörper aufgearbeitet werden.

3. Verfahren nach Anspruch 1, **dadurch gekennzeichnet, daß** das pyrotechnische Material in einem Muldenreaktor (102, 202), der eine fahrbare Wanne unterhalb der Abbrandkammer zur Aufnahme von abschmelzendem Material und absinkenden Schlacken aufweist, abgebrannt wird.

4. Verfahren nach Anspruch 1 oder 2, **dadurch gekennzeichnet, daß** das pyrotechnische Material in einem Rohrreaktor (1, 101, 201), dem Luft über Tangentialdüsen (5, 105, 205) zugeführt und über Tangentialbleche so geleitet wird, daß sie an der Wand des Rohrreaktors (1, 101, 201) entlangstreicht und den Stahlmantel kühlt, abgebrannt wird.

5. Verfahren zur Aufarbeitung von pyrotechnischem Material, bei dem man das pyrotechnische Material kontrolliert abbrennt und gegebenenfalls das entstehende Rohgas naß reinigt, **dadurch gekennzeichnet, daß man**
I. pyrotechnisches Material A, bei dem überwiegend alkalische Reaktionsprodukte entstehen, und pyrotechnisches Material B, bei dem überwiegend saure Reaktionsprodukte entstehen, kontrolliert abbrennt,
II. die vereinigten Rohgase auf eine Temperatur unter 400°C abkühlt,
III. die vereinigten Rohgase trocken reinigt, indem man sie zuerst in einen Vorabscheider (13, 113, 213) führt, wobei Grobpartikel abgeschieden werden, und das Rohgas dann über Feinstaubfilter (15, 115, 215) führt, um feinteilige Feststoffe abzuscheiden, und/oder
IV. das Rohgas naß reinigt, indem man es zuerst durch einen Rotationswäscher (121, 221) leitet und dann über eine oder mehrere Absorptionseinheit(en) (123, 223) leitet, und
V. das gereinigte Gas als Abluft entläßt.

6. Verfahren nach Anspruch 5, **dadurch gekennzeichnet, daß** man als pyrotechnisches Material A Signalkörper, Leuchtmunition und/oder thermitartige Sätze aufarbeitet.

7. Verfahren nach Anspruch 5 oder 6, **dadurch gekennzeichnet, daß** man als pyrotechnisches Material B Treibladungen, Raketentreibsätze, Nebel- und Reizkörper und/oder Farbrauche aufarbeitet.

8. Verfahren nach einem Ansprüche 5 bis 7, **dadurch gekennzeichnet, daß** man das pyrotechnische Material A und das pyrotechnische Material B getrennt abbrennt und die Rohgase anschließend vor Abkühlung gemäß Stufe II vereinigt.

9. Verfahren nach Anspruch 8, **dadurch gekennzeichnet, daß** man das pyrotechnische Material A in einem Rohrreaktor (1, 101, 201) abbrennt, dem Luft über Tangentialdüsen (5, 105, 205) zugeführt und über Tangentialbleche so geleitet wird, daß sie an der Wand des Stahlreaktors entlangstreicht und den Stahlmantel kühlt, und das pyrotechnische Material B in einem Muldenreaktor (102, 202) oder Drehrohrofen abbrennt, der mit feuerfestem Material ausgekleidet ist.

10. Verfahren nach einem der Ansprüche 5 bis 7, **dadurch gekennzeichnet, daß** man pyrotechnisches Material A und pyrotechnisches Material B gleichzeitig in einem Reaktor abbrennt.

11. Verfahren nach einem der vorhergehenden Ansprüche, **dadurch gekennzeichnet, daß** man statt pyrotechnischem Material A Magnesium-, Aluminium- und/oder Eisenpulver zusammen mit dem pyrotechnischen Material B verbrennt.

12. Verfahren nach einem der Ansprüche 5 bis 10, **dadurch gekennzeichnet, daß** Reaktionskammer und Gasbehandlungsvorrichtungen unter Unterdruck gehalten werden.

13. Verfahren nach einem der vorhergehenden Ansprüche, **dadurch gekennzeichnet, daß** in Stufe (I) das Rohgas auf eine Temperatur von bis zu 2000°C erhitzt wird.

14. Verfahren nach einem der vorhergehenden Ansprüche, **dadurch gekennzeichnet, daß** in Stufe (II) das Rohgas für die Trockenreinigung auf eine Temperatur unterhalb 200°C abgekühlt wird.

15. Verfahren nach einem der vorhergehenden Ansprüche, **dadurch gekennzeichnet, daß** in Stufe III das Rohgas, das direkt der Naßreinigung zugeführt wird, auf eine Temperatur unterhalb 140°C abgekühlt wird.

16. Verfahren nach einem der vorhergehenden Ansprüche, **dadurch gekennzeichnet, daß** in Stufe (III) als Vorabscheider (13, 113, 213) ein Multizyklon (213) verwendet wird.

17. Verfahren nach einem der vorhergehenden Ansprüche, **dadurch gekennzeichnet, daß** in Stufe (IV) dem Rotationswascher (121, 221) ein Venturiwäscher vorgeschaltet wird.

18. Verfahren nach einem der vorhergehenden Ansprüche, **dadurch gekennzeichnet, daß** in Stufe (IV) als Absorptionseinheit (123, 223) Füllkörperkolonnen oder Bodenkolonnen verwendet werden.

19. Vorrichtung zur Aufarbeitung von pyrotechnischem Material, **gekennzeichnet durch**
A) einen oder mehrere Reaktoren zum kontrollierten Abbrennen von pyrotechnischem Material (1, 101);
B) eine Wärmeaustauschereinheit (9, 109) zum Kühlen des Rohgases auf eine Temperatur von unter 400°C;
C)
i) einen Vorabscheider (13, 113, 213) zur Abtrennung von Grobpartikeln und
ii) einen oder mehrere Feinstaubfilter (15, 115, 215) und/oder
iii) eine Waschvorrichtung zur Naßwäsche des Rohgases umfassend einen Rotationswäscher (121, 221) und
iv) eine oder mehrere Absorptionseinheit(en) (123, 223),
wobei die einzelnen Komponenten (A) bis (C) je nach Erfordernis in beliebiger Weise miteinander verbunden sind.

20. Vorrichtung nach Anspruch 19, **dadurch gekennzeichnet, daß** die Komponenten (A), (B), (C iii) und (C iv) aufeinanderfolgend verbunden sind.

## Claims

1. Process for working up pyrotechnical material, in which
I. the pyrotechnical material is burned in a controlled manner, the slag is optionally allowed to continue reacting and the crude gas formed is passed through a high-temperature region in which the gas is exposed to a temperature of at least 1200°C over a predetermined period in order to decompose organic substances still present;
and the crude gas thereafter is optionally purified under wet conditions;
characterised in that
II. the crude gas formed during the combustion is cooled to a temperature below 400°C;
III. the crude gas is purified under dry conditions by first feeding it into a preliminary separator (13, 113, 213) in order to separate off coarse particles, and by then passing the crude gas through fine dust filters (15, 115, 215) in order to separate off finely divided solids, and/or
IV. the crude gas is purified under wet conditions by first passing it through a rotary scrubber (121, 221) and by then passing it via one or more absorption units (123, 223), and
V. the purified gas is released as waste air.

2. Process according to Claim 1, characterised in that the pyrotechnical material worked up comprises flares, illumination pyrotechnics, propellant charges, rocket propellant charges and/or smoke elements.

3. Process according to Claim 1, characterised in that the pyrotechnical material is burned in a trough reactor (102, 202) which has a mobile trough below the combustion chamber for receiving melting material and falling slag.

4. Process according to Claim 1 or 2, characterised in that the pyrotechnical material is burned in a tube reactor (1, 101, 201) to which air is supplied via tangential nozzles (5, 105, 205) and is passed over tangential plates in such a way that it flows along the wall of the tube reactor (1, 101, 201) and cools the steel jacket.

5. Process for working up pyrotechnical material, in which the pyrotechnical material is burned in a controlled manner and the crude gas formed is optionally purified under wet conditions,
characterised in that
I. a pyrotechnical material A, where predominantly alkaline reaction products are formed, and a pyrotechnical material B, where predominantly acidic reaction products are formed, are subjected to controlled combustion,
II. the combined crude gases are cooled to a temperature below 400°C,
III. the combined crude gases are purified under dry conditions by first feeding them into a preliminary separator (13, 113, 213) in order to separate off coarse particles, and by then passing the crude gas via fine dust filters (15, 115, 215) in order to separate off finely divided solids, and/or
IV. the crude gas is purified under wet conditions by first passing it through a rotary scrubber (121, 221) and by then passing it via one or more absorption unit(s) (123, 223), and
V. the purified gas is released as waste air.

6. Process according to Claim 5, characterised in that flares, illumination pyrotechnics and/or thermite-like charges are worked up as pyrotechnical material A.

7. Process according to Claim 5 or 6, characterised in that propellant charges, rocket propellant charges, smoke and irritant elements and/or coloured smokes are worked up as pyrotechnical material B.

8. Process according to any of claims 5 to 7, characterised in that the pyrotechnical material A and the pyrotechnical material B are burned separately and the crude gases are then combined before cooling according to stage II.

9. Process according to Claim 8, characterised in that the pyrotechnical material A is burned in a tube reactor (1, 101, 201) to which air is fed via tangential nozzles (5, 105, 205) and is passed over tangential plates so that it flows along the wall of the steel reactor and cools the steel jacket, and the pyrotechnical material B is burned in a trough reactor (102, 202) or rotary kiln which is lined with refractory material.

10. Process according to any of Claims 5 to 7, characterised in that pyrotechnical material A and pyrotechnical material B are burned simultaneously in one reactor.

11. Process according to any of the preceding claims, characterised in that, instead of pyrotechnical material A, magnesium, aluminium and/or iron powder are burned together with the pyrotechnical material B.

12. Process according to any of claims 5 to 10, characterised in that the reaction chamber and gas treatment apparatuses are kept under reduced pressure.

13. Process according to any of the preceding claims, characterised in that, in stage (I), the crude gas is heated to a temperature of up to 2000°C.

14. Process according to any of the preceding claims, characterised in that, in stage (II), the crude gas for the dry purification is cooled to a temperature below 200°C.

15. Process according to any of the preceding claims, characterised in that, in stage III, the crude gas which is supplied directly to the wet purification is cooled to a temperature below 140°C.

16. Process according to any of the preceding claims, characterised in that, in stage (III), a multicyclone (213) is used as the preliminary separator (13, 113, 213).

17. Process according to any of the preceding claims, characterised in that, in stage (IV), a Venturi scrubber is located upstream of the rotary scrubber (121, 221).

18. Process according to any of the preceding claims, characterised in that, in stage (IV), packed columns or tray columns are used as the absorption unit (123, 223).

19. Apparatus for working up pyrotechnical material, characterised by
A) one or more reactors for the controlled combustion of pyrotechnical material (1, 101);
B) a heat exchanger unit (9, 109) for cooling the crude gas to a temperature of below 400°C;
C)
i) a preliminary separator (13, 113, 213) for separating off coarse particles; and
ii) one or more fine dust filters (15, 115, 215), and/or
iii) a scrubbing apparatus for scrubbing the crude gas comprising a rotary scrubber (121, 221), and
iv) one or more absorption unit(s) (123, 223),
the individual components (A) to (C) being connected to one another in any manner, depending on requirements.

20. Apparatus according to Claim 19, characterised in that the components (A), (B), (C iii) and (C iv) and are connected in series.

## Revendications

1. Procédé de traitement de matière pyrotechnique dans lequel
I. on soumet la matière pyrotechnique à une combustion contrôlée, on laisse éventuellement réagir encore la scorie et on conduit le gaz brut formé dans un domaine à haute température dans lequel le gaz est exposé pendant une durée prédéterminée à une température d'au moins 1 200°C pour décomposer les substances organiques encore présentes ;
puis, éventuellement, on épure par voie humide le gaz brut, caractérisé en ce que
II. on refroidit à une température inférieure à 400°C le gaz brut formé lors de la combustion ;
III. on épure par voie sèche le gaz brut en le conduisant tout d'abord dans un préséparateur (13, 113, 213) dans lequel les particules grossières sont séparées, puis on conduit le gaz brut sur un filtre à poussières fines (15, 115, 215) pour séparer les solides finement divisés et/ou
IV. on épure par voie humide le gaz brut en le conduisant tout d'abord dans un laveur rotatif (121, 221) puis en le conduisant sur une ou plusieurs unités d'absorption (123, 223), et
V. on laisse échapper le gaz épuré sous forme d'air d'évacuation.

2. Procédé selon la revendication 1, caractérisé en ce que des corps de signalisation, une munition éclairante, des charges propulsives, des compositions propulsives pour fusée et/ou des corps fumigènes sont traités en tant que matière pyrotechnique.

3. Procédé selon la revendication 1, caractérisé en ce que la matière pyrotechnique est soumise à une combustion dans un réacteur à auge (102, 202) qui comporte une cuve mobile sous la chambre de combustion pour la réception de matière fondante et de scories descendantes.

4. Procédé selon la revendication 1 ou 2, caractérisé en ce que la matière pyrotechnique est soumise à une combustion dans un réacteur tubulaire (1, 101, 201) dans lequel de l'air est introduit par l'intermédiaire de buses tangentielles (5, 105, 205) et est conduit par le biais de chicanes tangentielles de telle manière qu'il passe le long de la paroi du réacteur tubulaire (1, 101, 201) et qu'il refroidit l'enveloppe en acier.

5. Procédé de traitement de matière pyrotechnique dans lequel on soumet la matière pyrotechnique à une combustion contrôlée et éventuellement on épure par voie humide le gaz brut formé, caractérisé en ce que
I. on soumet à une combustion contrôlée une matière pyrotechnique A, dans laquelle il se forme principalement des produits de réaction alcalins, et une matière pyrotechnique B dans laquelle il se forme principalement des produits de réaction acides,
II. on refroidit à une température inférieure à 400°C les gaz bruts réunis,
III. on épure par voie sèche les gaz bruts réunis en les conduisant tout d'abord dans un préséparateur (13, 113, 213) dans lequel les particules grossières sont séparées et on conduit ensuite le gaz brut sur un filtre à poussières fines (15, 115, 215) pour séparer les solides finement divisés, et/ou
IV. on épure par voie humide le gaz brut en le conduisant tout d'abord dans un laveur rotatif (121, 221) puis en le conduisant sur une ou plusieurs unités d'absorption (123, 223), et
V. on laisse échapper le gaz épuré sous forme d'air d'évacuation.

6. Procédé selon la revendication 5, caractérisé en ce que l'on traite comme matière pyrotechnique A des corps de signalisation, une munition éclairante et/ou des compositions de type thermite.

7. Procédé selon la revendication 5 ou 6, caractérisé en ce que l'on traite comme matière pyrotechnique B des charges propulsives, des compositions propulsives pour fusée, des corps fumigènes et irritants et/ou des fumées colorées.

8. Procédé selon l'une des revendications 5 à 7, caractérisé en ce que l'on soumet séparément à une combustion la matière pyrotechnique A et la matière pyrotechnique B puis on réunit les gaz bruts avant le refroidissement selon l'étape II.

9. Procédé selon la revendication 8, caractérisé en ce que l'on soumet à une combustion la matière pyrotechnique A dans un réacteur tubulaire (1, 101, 201) dans lequel de l'air est introduit par le biais de buses tangentielles (5, 105, 205) et est conduit par l'intermédiaire de chicanes tangentielles de telle manière qu'il passe le long de la paroi du réacteur en acier et qu'il refroidit l'enveloppe en acier, et on soumet à une combustion la matière pyrotechnique B dans un réacteur à auge (102, 202) ou dans un four tubulaire rotatif qui est revêtu de matériau réfractaire.

10. Procédé selon l'une des revendications 5 à 7, caractérisé en ce que l'on soumet simultanément à une combustion dans un réacteur la matière pyrotechnique A et la matière pyrotechnique B.

11. Procédé selon l'une des revendications précédentes, caractérisé en ce que, à la place de la matière pyrotechnique A, on soumet à une combustion une poudre de magnésium, d'aluminium et/ou de fer en même temps que la matière pyrotechnique B.

12. Procédé selon l'une des revendications 5 à 10, caractérisé en ce que la chambre de réaction et les dispositifs de traitement de gaz sont maintenus sous pression négative.

13. Procédé selon l'une des revendications précédentes, caractérisé en ce que, dans l'étape (I), le gaz brut est chauffé à une température pouvant atteindre 2 000°C.

14. Procédé selon l'une des revendications précédentes, caractérisé en ce que, dans l'étape (II), le gaz brut pour l'épuration à sec est refroidi à une température inférieure à 200°C.

15. Procédé selon l'une des revendications précédentes, caractérisé en ce que, dans l'étape (III), le gaz brut, qui est envoyé directement à l'épuration humide, est refroidi à une température inférieure à 140°C.

16. Procédé selon l'une des revendication précédentes, caractérisé en ce que, dans l'étape (III), un multicyclone (213) est utilisé comme préséparateur (13, 113, 213).

17. Procédé selon l'une des revendications précédentes, caractérisé en ce que, dans l'étape (IV), un laveur à venturi est branché en amont du laveur rotatif (121, 221).

18. Procédé selon l'une des revendications précédentes, caractérisé en ce que, dans l'étape (IV), des colonnes à garnissage ou des colonnes à plateaux sont utilisées comme unité d'absorption (123, 223).

19. Dispositif de traitement de matière pyrotechnique, caractérisé par
A) un ou plusieurs réacteurs pour la combustion contrôlée de matière pyrotechnique (1, 101) ;
B) une unité d'échange de chaleur (9, 109) pour refroidir le gaz brut à une température inférieure à 400°C ;
C)
i) un préséparateur (13, 113, 213) pour la séparation des particules grossières et
ii) un ou plusieurs filtres à poussières fines (15, 115, 215) et/ou
iii) un dispositif de lavage pour le lavage humide du gaz brut comportant un laveur rotatif (121, 221) et
iv) une ou plusieurs unités d'absorption (123, 223), les différents constituants (A) à (C) étant reliés entre eux de manière quelconque selon les besoins.

20. Dispositif selon la revendication 19, caractérisé en ce que les constituants (A), (B), (C iii) et (C iv) sont reliés en se suivant.
